# EUROPEAN PATENT APPLICATION

(11) **EP 2 824 609 A1**
(43) Date of publication of application: **14.01.2015**
(21) Application number: 14175436.6
(22) Date of filing: 02.07.2014
(51) Int. Cl.: G06K 9/20, G06K 9/32

(54) **Methods of sifting out significant visual patterns from visual data**

(30) Priority: 09.07.2013 US 201313937229
(71) Applicant: MediaTek Inc., Hsin-Chu (TW)
(72) Inventor: Tam, Io-Kuong, Zhubei City, Hsinchu County (TW); Tsao, Hsi-Kang, Hsinchu City (TW)
(74) Representative: Hoefer & Partner

(57) **Abstract**

An embodiment of the invention provides a method performed by an electronic device for analyzing visual data. Under the method, the electronic device first analyzes significance-indication information of an image block of visual data to determine whether the image block encompasses a significant visual pattern. The significance-indication information includes the image block's time domain information and/or color domain information. Then, if the electronic device determines that the image block encompasses the significant visual pattern, it sifts the image block out from the visual data.

## Description

### BACKGROUND

### 1. Technical Field

The invention relates generally to visual data, and more particularly, to methods of sifting out significant visual patterns from visual data.

### 2. Related art

When visual data, such as video data, image data, or graphic data, is displayed, it may visually show some patterns of potential interest to the visual data's viewer. These patterns may be referred to as significant visual patterns. To use a significant visual pattern the viewer sees and becomes interested in, he or she may need to conduct some manual operations. These manual operations may be tedious and/or time-consuming. To avoid the hassle of the manual operations, sometimes the viewer may decide to do nothing but simply neglecting the significant visual patterns.

### SUMMARY

Embodiments of the invention provide methods to resolve the aforementioned problem and to achieve some other objectives. According to one of the embodiments, an electronic device first analyzes significance-indication information of an image block of visual data to determine whether the image block encompasses a significant visual pattern. The significance-indication information includes the image block's time domain information and/or color domain information. Then, if the electronic device determines that the image block encompasses the significant visual pattern, it sifts the image block out from the visual data.

According to another one of the embodiments, an electronic device first analyzes significance-indication information of an image block contained in visual data to determine whether the image block encompasses a significant visual pattern. The significance-indication information is determined from the image block's color domain information. Then, the electronic device sifts the image block out from the visual data if it's determined that the image block encompasses the significant visual pattern.

Other features of the present invention will be apparent from the accompanying drawings and from the detailed description which follows.

### BRIEF DESCRIPTION OF DRAWINGS

The invention is fully illustrated by the subsequent detailed description and the accompanying drawings, in which like references indicate similar elements.

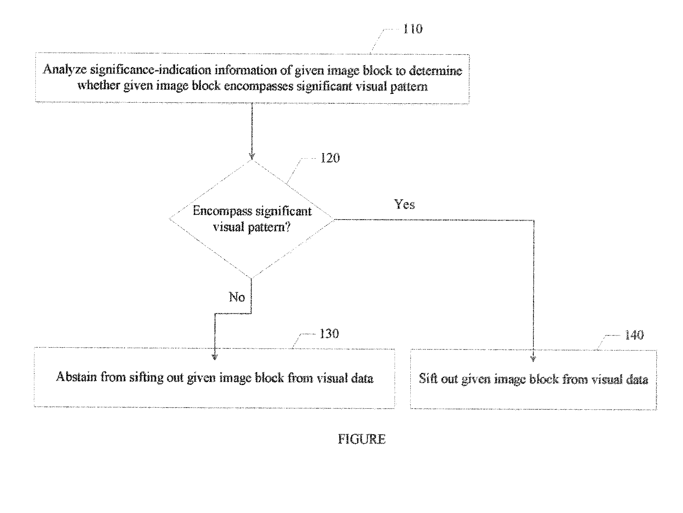

The FIGURE shows a flowchart of a method according to an embodiment of the invention.

### DETAILED DESCRIPTION

The invention provides some methods to be performed by an electronic device. The electronic device may perform any of the methods while it is displaying, i.e. showing visually, some visual data. The visual data may be a video, some images, or some graphics the electronic device has fetched from a storage medium (such as a hard disk, an optical disc, or a flash memory) or received from a network (such as a TV broadcasting network, a telecommunications network, an intranet, or the Internet). To name a few examples, the electronic device may be a TV, a computer monitor, a projector, a set-top box, an optical disc player, a media player, a desktop computer, a laptop computer, a tablet computer, a smart phone, or a video game console. The electronic device may enable, disable, or adjust the frequencies of some or all the functions facilitated by the methods of the invention. For example, if the visual data is a video on a TV channel, the electronic device may enable the functions only during commercial breaks. As another example, the electronic device may disable the functions if the viewer seldom or never reacts to the electronic device's selection of significant visual patterns.

One of the objectives of the methods is to sift out significant visual patterns from the visual data because these patterns may be of potential interest to the visual data's viewer. For example, a significant visual pattern may be a logo, a trademark, a slogan, a phone number, an Internet address, or a human face comprised in an image of the visual data. If desired, the electronic device may then automatically use the sifted-out significant visual patterns for the viewer.

The FIGURE shows a flowchart of a method according to an embodiment of the invention. The electronic device can perform the method to determine whether a given image block comprises in the visual data encompasses a significant visual pattern. Generally speaking, the given image block is smaller than the full size images contained in the visual data. The given image block needs not have a predetermined size or a predetermined location. To perform the method, the electronic device may select the given image block on its own or interact with the viewer in order to select the given image block. For example, the given image block may be selected from a search region specified by the viewer manually. Specifically, within the area in which the electronic device displays images of the visual data, the viewer may manually specify only a search region from which the given image block will be selected and then analyzed under the method shown in the FIGURE. For example, the viewer may select a search region by giving the electronic device a boundary line (which needs not be closed) or some boundary points around the search region, or a diagonal/horizontal/vertical line across the search region, or an inner point of the search region so that the electronic device may then define the search region based on the inner point.

The electronic device may perform the method multiple times for several candidate images blocks in order to sift out some or all of the significant visual patterns comprised in the visual data. The electronic device may start performing the method automatically or in response to the viewer's instruction. For example, the electronic device may perform the method automatically once it detects that a plurality of successive images of the visual data have some identical visual information. As another example, the electronic device may perform the method after the viewer presses a button (e.g. a pause button) on a remote control of the electronic device.

First, at steps 110 and 120, the electronic device analyzes significance-indication information of a given image block selected from the visual data to determine whether the given image block encompasses a significant visual pattern. The significance-indication information is information related to the given image block and indicates whether it's likely that the given image block encompasses a significant visual pattern. For example, the significance-indication information may include the given image block's time domain information and/or color domain information.

Regardless of whether the visual data is a video or a series of images, it is unusual that an image block reappears at the same position in many successive images. If the image block does, it is likely that the creator of the visual data wants to emphasize the image block, e.g. because the image block encompasses a significant visual pattern. For example, in a TV commercial, the advertiser likely will want a logo, a trademark, a slogan, a phone number, or an Internet address, e.g. URL, to remain still (i.e. neither move nor disappear) for more than, say, 2 seconds. If the visual data has 60 images per second, i.e. frame rate 60 Hz, it means that the advertiser may emphasize the image block by keeping it still for more than 120 successive images. Therefore, at step 110, the electronic device may analyze the given image block's time domain information by checking whether the given image block remains still in more than a threshold number of successive images of the visual data. For example, if the visual data is a video, the threshold number may be 120; if the visual data is a slide show, the threshold number may be 5.

In addition, an image block encompassing a significant visual pattern, such as a logo, a trademark, a slogan, a phone number, or an Internet address likely has a chromatic number that lies within a specific range. The chromatic number is the count of different colors making up the given image block. The specific range may be relatively narrow. For example, to encompass a significant visual pattern, the chromatic number may be at least 2; to make the significant visual pattern succinct and easily recognizable, the chromatic number may not be greater than 5. Therefore, at step 110, the electronic device may analyze the given image block's color domain information by checking whether the given image block's chromatic number lies within a specific range having 2 and 5 as two inclusive boundaries. In another embodiment, the significant visual pattern may act as a foreground image, and may be superposed with a colorful nature background image. The chromatic number may be a quite large number. In such a case, the electronic device may analyze the given image block's color domain information by checking whether the given image block's majority chromatic number lies within a specific range having 2 and 5 as two inclusive boundaries. The majority chromatic number refers to the number of dominant colors which occupy the majority area of the given image block. In one embodiment, a person of skill in the art will understand that the majority chromatic number could be determined by using a histogram or the like.

After analyzing the given image block's significance-indication information, the electronic device enters step 130 if it determines that the given image block does not encompass a significant visual pattern; otherwise, the electronic device enters step 140. At step 130, the electronic device abstains from sifting out the given image block from the visual data, e.g. by displaying the visual data as usual. After step 130, the electronic device may end the process or go back to step 110 if there is another image block needs to be analyzed.

At step 140, having determined that the given image block encompasses a significant visual pattern, the electronic device sifts out the given image block from the visual data. For example, the electronic device may highlight the given image block; the viewer may then decide whether to let the electronic device use the significant visual pattern. The electronic device may highlight the given image block by displaying a visible boundary around the given image block or by popping up a message window to inform the viewer the detection of the significant visual pattern. If the electronic device has performed the method multiple times and has detected several significant visual patterns in an image of the visual data, the display of which may have been frozen/paused, the electronic device may highlight all the sifted-out significant visual patterns and let the viewer select among these sifted-out patterns. After step 140, the electronic device may end the process or go back to step 110 if there is another image block which needs to be analyzed.

Whether automatically or under the viewer's instruction, the electronic device may use a sifted-out image block after step 140. If the sifted-out image block encompasses a logo, a trademark, a slogan, or a human face, the electronic device may search a database by directly using the sifted-out image block as a search query, and then provide the search result to the viewer. If the sifted-out image block encompasses some visible text, the electronic device may convert the sifted-out image block into a text string through optical character recognition (OCR), store the text string into a buffer, search the database by using the text string as a search query, and then provide the search result to the viewer. In one embodiment, the text string may be stored in a memory device as one entry of a favorite list, so that the user may reuse the text string. In another embodiment, the electronic device may request a search application to other devices through a network so as to conduct a search operation and return the search result to the electronic device. The database may be on the Internet, an intranet, a home network, or the electronic device itself. If the electronic device uses the sifted-out image block as a search query and the searched database is not a local one, the electronic device may save network bandwidth by compressing the image block and/or converting it into a gray/binary one before sending it to the search engine.

The electronic device's use of the sifted-out image block may be valuable, especially when the viewer is interested in the significant visual pattern encompassed therein. For example, if the significant visual pattern is a logo or a slogan of a company, such as the bitten apple logo or the "Think Different" slogan of Apple Inc., or the swoosh logo or the "JUST DO IT" slogan of Nike Inc., after searching the database the electronic device may present the company's webpage, e.g. on a screen of the electronic device, to the viewer. If the significant visual pattern is a celebrity's face, after searching the database the electronic device may present the celebrity's Twitter or Facebook profile or Youtube video clips to the viewer. In yet another embodiment, the search result may be redirected to a second electronic device which is different from the one that sends the search request. For example, when a user watches a television and sends the search request from the television, the search result may be redirect to a tablet device which is predefined by the user.

If the sifted-out image block encompasses a visible Internet address, the electronic device may first convert the sifted-out image block into a text string through OCR, and then connect and display the webpage associated with the Internet address on the screen of the electronic device. If the sifted-out image block encompasses a visible phone number, the electronic device may first convert the sifted-out image block into a number string through OCR, store the number string in a buffer, and then initiate a call using the number string. For example, the electronic device may convert an image block of "1-800-NEW-HONDA" into a number string of "1-800-639-46632" and then initiate a phone call. In one embodiment, the number string may be stored in the memory device as one entry of a phone book or contact list, so that the user may reuse the number string.

The methods of the invention may allow the electronic device to sift out significant visual patterns from the visual data for the viewer, and then use the sifted-out significant visual patterns automatically. The viewer is relieved from the hassle of manual operations which are conventionally performed when the viewer sees a significant visual pattern and wants to make use of it.

In the foregoing detailed description, the invention has been described with reference to specific exemplary embodiments thereof. The detailed description and drawings are, accordingly, to be regarded in an illustrative sense rather than a restrictive sense.

## Claims

1. A method performed by an electronic device, **characterized by**:
analyzing significance-indication information of an image block comprised in visual data to determine whether the image block encompasses a significant visual pattern, wherein the significance-indication information is selected from a group consisting of the image block's time domain information and the image block's color domain information; and
sifting the image block out from the visual data when it is determined that the image block encompasses the significant visual pattern.

2. The method of claim 1, **characterized in that** the significance-indication information comprises the image block's time domain information and color domain information.

3. The method of claim 1, **characterized in that** the step of analyzing the significance-indication information of the image block comprises:
checking whether the image block remains still in more than a threshold number of successive images of the visual data.

4. The method of claim 1, **characterized in that** the step of analyzing the significance-indication information of the image block comprises:
checking whether the image block has a chromatic number that lies within a predetermined range.

5. The method of claim 1, **characterized in that** the significant visual pattern is a logo, a trademark, a slogan, a phone number, an Internet address, or a human face.

6. The method of claim 1, further **characterized by**:
searching a database by using the sifted-out image block as a search query.

7. The method of claim 1, further **characterized by**:
converting the sifted-out image block into a text string; and
searching a database by using the text string as a search query.

8. The method of claim 1, further **characterized by**:
converting the sifted-out image block into a text string; and
storing the text string in a memory.

9. The method of claim 8, further **characterized by**:
using the text string as an Internet address to connect a webpage.

10. The method of claim 1, further **characterized by**:
converting the sifted-out image block into a number string; and
storing the number string in a memory.

11. The method of claim 10, further **characterized by**:
initiating a phone call using the number string.

12. The method of claim 1, further **characterized by**:
selecting the image block from a search region manually specified by a viewer of the visual data.
